# EUROPÄISCHE PATENTANMELDUNG

(11) **EP 3 552 746 A1**
(43) Veröffentlichungstag der Anmeldung: **16.10.2019**
(21) Anmeldenummer: 18166471.5
(22) Anmeldetag: 10.04.2018
(51) Int. Cl.: B23H 1/04, C25D 5/02, C25D 5/06, C25F 7/00, B23H 3/04, B22F 3/105, B22F 3/24, B23H 1/06, B23H 7/30, C25D 17/14, B23H 3/06

(54) **VORRICHTUNG ZUM SELEKTIVEN ELEKTROCHEMISCHEN BEARBEITEN VON WERKSTÜCKEN UND ANLAGE ZUM HERSTELLEN EINES WERKSTÜCKS MIT EINER SOLCHEN VORRICHTUNG**

(71) Anmelder: Siemens Aktiengesellschaft, 80333 München (DE)
(72) Erfinder: Jensen, Jens Dahl, 14050 Berlin (DE); Schneider, Manuela, 13581 Berlin (DE); Winkler, Gabriele, 13587 Berlin (DE)

(57) **Zusammenfassung**

Es wird eine Vorrichtung zum selektiven elektrochemischen Bearbeiten von Werkstücken (14) vorgeschlagen. Diese weist einen Bearbeitungskopf (11) auf, der mit einem Elektrolytüberträger (16) ausgestattet ist. Dieser weist eine Bearbeitungsfläche (15) für die Oberfläche (13) des Werkstücks (14) auf. Erfindungsgemäß ist vorgesehen, dass der Elektrolytüberträger im Inneren eines Zuführkanals (22) geführt wird, so dass der Aufbau mit einem Filzstift vergleichbar ist. Hierdurch kann eine sehr kleine Bearbeitungsfläche (15) realisiert werden, um eine lokale Bearbeitung der Oberfläche (13) zu ermöglichen. Vorteilhaft kann die erfindungsgemäße Vorrichtung auch in einer Anlage zum additiven Fertigen von Bauteilen zum Einsatz kommen.

## Beschreibung

Die Erfindung betrifft eine Vorrichtung zum selektiven elektrochemischen Bearbeiten von Werkstücken, aufweisend einen Bearbeitungskopf, der mit einem Elektrolytüberträger und einem Zuführkanal für einen Elektrolyten ausgestattet ist. Außerdem betrifft die Erfindung eine Anlage zum additiven Herstellen eines Werkstücks mit einer Aufnahme für das Werkstück.

Vorrichtungen zum selektiven elektrochemischen Bearbeiten sind beispielsweise aus der DE 10 2015 201 080 A1 bekannt. Danach kann ein elektrochemisches Bearbeiten aus einem Abtragen von Material von der Oberfläche eines metallischen Bauteils bestehen. Beispielsweise wird dies erforderlich, wenn durch ein additives Herstellen ein Bauteil erzeugt wurde, dessen Oberflächengüte für den intendierten Anwendungsfall nicht ausreicht. Die Vorrichtung zum selektiven elektrochemischen Bearbeiten kann dann dazu genutzt werden, dass das Bauteil zumindest an den für den Einsatz kritischen Stellen elektrochemisch nachbearbeitet wird. Durch eine Zwangsführung des Bearbeitungskopfes können bestimmte Geometrien mit an diese Geometrie angepassten Elektrolytüberträgern wie z. B. Schwämmen oder Bürsten erzeugt werden.

Die Aufgabe der Erfindung besteht darin, eine Vorrichtung zum selektiven elektrochemischen Bearbeiten zu schaffen, mit der eine vergleichsweise universelle und präzise Bearbeitung von Werkstücken, insbesondere von mittels Additive Manufacturing hergestellten möglich ist.

Diese Aufgabe wird mit der eingangs angegebenen Vorrichtung erfindungsgemäß dadurch gelöst, dass der Elektrolytüberträger im Inneren des Zuführkanals angeordnet ist und durch eine Austrittsöffnung des Zuführkanals unter Ausbildung einer Bearbeitungsfläche für das Werkstück nach außen geführt ist. Die Austrittsöffnung dient somit erfindungsgemäß gleichzeitig zur Dosierung des Elektrolyten, aber auch zur Durchführung des Elektrolytüberträgers, der an sich im Inneren des Zuführkanals angeordnet ist und nur mit einem kleinen Teil aus der Austrittsöffnung herausragt. Dieser Teil bildet u. a. die Bearbeitungsfläche für das Werkstück, d. h. diejenige Fläche, die mit dem Werkstück in Kontakt kommt und infolgedessen eine elektrochemische Bearbeitung des Werkstücks unter Zuhilfenahme des durch den Elektrolytüberträger übertragenen Elektrolyts ermöglicht. Ein Bearbeiten des Werkstücks kann sowohl in einem elektrochemischen Beschichten wie auch in einem elektrochemischen Entschichten bestehen. Dies hängt von mehreren Faktoren ab. Einerseits kann durch Auswahl eines geeigneten Elektrolyten eine Beschichtung oder Entschichtung erreicht werden. Dies ist auf elektrochemischem Wege bei Wahl der richtigen Elektrolyte auch stromlos möglich. Eine andere Möglichkeit besteht darin, an den Elektrolytüberträger sowie das Werkstück eine Spannung anzulegen. Je nach Polarität dieser Spannung kann das Werkstück beschichtet oder entschichtet werden (hierzu im Folgenden noch mehr).

Der Elektrolytüberträger in dem Zuführkanal kann vorteilhaft ähnlich einem Filzstift aufgebaut sein. Dies bedeutet, dass die Bearbeitungsfläche des Elektrolytüberträgers sehr klein gehalten werden kann, also vergleichsweise entsprechend der Spitze des Filzstifts ausgebildet ist. Hierdurch ist eine lokal sehr begrenzte Beaufschlagung des Werkstücks mit der elektrochemischen Bearbeitung möglich. Dies passt insbesondere zu der Selektivität eines Additive Manufacturing Verfahrens, wie z. B. dem Laserschmelzen oder dem Elektronenstrahlschmelzen. Es kann mit dem Elektrolytüberträger gezielt auf einzelne hergestellte Regionen des Werkstücks zugegriffen werden, wobei eine geeignete Steuerung die genaue Zuführung des Elektrolytüberträgers an die zu bearbeitende Oberfläche des Bauteils ermöglicht.

Gemäß einer vorteilhaften Ausgestaltung der Erfindung ist vorgesehen, dass der Elektrolytüberträger zylindrisch ist und derart beweglich in dem Zuführkanal angeordnet ist, dass dieser in der Austrittsöffnung axial verschoben werden kann. Hierdurch wird es vorteilhaft ermöglicht, dass der Elektrolytüberträger bei einem Verschleiß in dem Zuführkanal bewegt werden kann, um durch die Austrittsöffnung nachgeführt zu werden. Auf diesem Weg wird der Verschleiß des Elektrolytüberträgers ausgeglichen. Hierdurch sind längere Standzeiten des Elektrolytüberträgers bzw. ein längerer wartungsfreier Betrieb des Bearbeitungskopfes der Vorrichtung möglich. Dies wirkt sich auch vorteilhaft auf die Wirtschaftlichkeit des Verfahrens aus.

Gemäß einer anderen Ausgestaltung der Erfindung ist vorgesehen, dass der Elektrolytüberträger ein gerolltes Fließ, insbesondere ein gerolltes faserverstärktes Fließ umfasst. Das Fließ bildet die Kapillaren, die zur Führung des Elektrolyts erforderlich sind. Es handelt sich hierbei um ein kostengünstig zu beschaffendes Halbzeug, welches durch Rollen zu einer Art Filzschreibermine, nämlich dem Elektrolytüberträger, hergestellt werden kann. Gleichzeitig ist es vorteilhaft möglich, dass in das gerollte Fließ eine Elektrode zur Übertragung eines Elektrodenstroms für ein elektrochemisches Beschichten untergebracht wird. Beispielsweise kann das Fließ um eine stabförmige Elektrode gewickelt sein, die dann in der zentralen Mittelachse der zylindrisch ausgebildeten Elektrolytüberträgers angeordnet ist. Eine andere Möglichkeit besteht darin, mehrere Drähte als Elektroden mit in den Elektrolytüberträger hineinzuwickeln. Dies verbessert die Stromverteilung innerhalb des Elektrolytüberträgers, wobei mit einem vergleichsweise geringen Materialaufwand für die Elektroden eine große Oberfläche zur Übertragung des elektrischen Stroms zur Verfügung steht.

Vorteilhaft ist es dabei, dass der Zuführkanal zylindrisch ausgeführt ist und der Elektrolytüberträger koaxial im Zuführkanal verläuft. Zum einen lässt sich dadurch der Elektrolyt gleichmäßig dem Elektrolytüberträger zuführen, da dieser vollständig von dem Elektrolyt umflossen werden kann. Außerdem hat eine solche Vorrichtung vorteilhaft einen vergleichsweise einfachen Aufbau und lässt sich daher einfach herstellen. Zuletzt ist die axiale Verschiebung des Elektrolytüberträgers im Falle eines Verschleißes durch die Austrittsöffnung vorteilhaft auf einfachem Weg zu realisieren,

Eine wieder andere Ausgestaltung der Erfindung sieht vor, dass in dem Elektrolytüberträger Partikel aus einem im Vergleich zu dem Elektrolytüberträger härteren Material vorgesehen sind. Diese Partikel können beispielsweise aus einem Hartstoff bestehen. Hierzu eignen sich übliche Stoffe wie Korund, Diamant und andere. Die Partikel verringern den Verschleiß des Elektrolytüberträgers, wenn dieser über die zu bearbeitende Fläche reibt. Insbesondere bei einer abtragenden Bearbeitung unterstützt dies auch den Abtragungsprozess, weil die Oberfläche mit den Partikeln gezielt mechanisch verletzt werden kann. Vorteilhaft sind die Partikel auch härter als der zu bearbeitende Stoff, damit eine Nachbearbeitung der Oberfläche mit einem zusätzlichen Materialabtrag ermöglicht wird.

Gemäß einer anderen Ausgestaltung der Erfindung ist vorgesehen, dass der Bearbeitungskopf ein Rohr, insbesondere aus Glas, umfasst, in dem der Zuführkanal verläuft. Die Herstellung aus einem Rohr bewirkt vorteilhaft eine einfache Geometrie des Bearbeitungskopfes, so dass dieser sich kostengünstig herstellen lässt. Ist dieser insbesondere aus Glas hergestellt, hat dies zusätzlich den Vorteil, das Glas für die meisten zur Anwendung kommenden Elektrolyte innert ist und somit an der Reaktion nicht beteiligt ist. Ein transparentes Glas ermöglicht außerdem zusätzlich eine optische Kontrolle des Bearbeitungsprozesses, wobei beispielsweise das Auftreten von Verklumpungen in abzuscheidenden Partikeln im Zuführkanal sowie der Zustand des Elektrolytüberträgers jederzeit überprüft werden können.

Eine wieder andere Ausgestaltung der Erfindung sieht vor, dass die Austrittsöffnung durch ein sich verjüngendes Rohrende des Rohres ausgebildet ist. Dies lässt sich beispielsweise in Glas sehr einfach herstellen. Die Austrittsöffnung wird im Querschnitt dann vorteilhaft an den Elektrolytüberträger angepasst, wodurch erreicht wird, dass die Leckage an dieser Stelle gering gehalten werden kann und das geförderte Elektrolyt lediglich durch die in dem Elektrolytüberträger vorhandenen Kapillaren gefördert wird.

Vorteilhaft ist es auch, wenn der Zuführkanal mindestens zwei Einspeisungsstellen für unterschiedliche Beschichtungsmaterialien aufweist. Neben den Beschichtungsmaterialien, die vorzugsweise zunächst aus den im Elektrolyt dissoziierten Ionen bestehen, können vorteilhaft insbesondere Partikel verwendet werden, die in eine sich ausbildende Schicht eingebaut werden können. Diese werden dann durch den Elektrolytüberträger mitgefördert, wobei die Partikel eine Größe aufweisen müssen, dass diese durch die durch den Elektrolytüberträger gebildeten Poren / Kapillaren passen. Insbesondere können auch Nanopartikel ausgewählt werden, mit denen sich vorteilhaft Schichten mit besonderen Eigenschaftsprofilen erzeugen lassen.

Weiterhin kann vorteilhaft vorgesehen werden, dass an der Austrittsöffnung eine Absaugöffnung eines Absaugkanals angeordnet ist. Der Absaugkanal ermöglicht über die Absaugöffnung damit vorteilhaft, dass das Elektrolyt, welches aus dem Elektrolytüberträger ausgetreten ist, nach Durchführung des Beschichtungsprozesses wieder von der bearbeiteten Oberfläche entfernt werden kann. Dieses kann anschließend einer Wiederverwertung zugeführt werden und verschlechtert außerdem nicht die Bauzeitqualitäten an Stellen, in denen eine Nachbearbeitung nicht vorgesehen ist.

Weiterhin ist es vorteilhaft auch möglich, dass die Absaugöffnung ringförmig um die Auslassöffnung ausgebildet ist. Dies ermöglicht ein Absaugen des Elektrolyten unabhängig davon, in welche Richtung dieser nach Austreten aus dem Elektrolytüberträger fließt. Dies kann sich bei dem Bauteil beispielsweise dadurch ändern, dass die Oberfläche mit unterschiedlichen Steigungen im Raum angeordnet ist, während eine Nachbearbeitung erfolgt.

Gemäß einer besonderen Ausgestaltung der Erfindung kann auch vorgesehen werden, dass an der Austrittsöffnung eine Spülöffnung eines Spülkanals angeordnet ist. Mit dem Spülkanal kann eine Spülflüssigkeit auf die Oberfläche aufgetragen werden, um nach einer Bearbeitung beispielsweise Elektrolytreste zu entfernen. Hierdurch kann insbesondere ein ablaufender elektrochemischer Bearbeitungsprozess unterbrochen werden, der nicht mehr gewünscht ist.

Der Bearbeitungsprozess kann außerdem unterstützt werden, indem der Bearbeitungskopf gemäß einer weiteren Ausgestaltung der Erfindung mit einem Vibrationsaktuator, insbesondere einem Piezoaktor, ausgestattet ist. Hierdurch wird der Bearbeitungskopf in Vibrationen versetzt, die sich auf die zu bearbeitende Oberfläche fortpflanzen. Dies bewirkt eine ständige Relativbewegung zwischen dem zu bearbeitenden Bauteil und dem Bearbeitungskopf, wodurch der Bearbeitungsprozess unterstützt wird. Insbesondere kann ein Entschichten unterstützt werden, bei dem ein Elektrolytüberträger zum Einsatz kommt, der zusätzlich harte Partikel enthält. Diese wirken dann wie ein Schleifmittel, welches durch die Vibration mit einer Relativbewegung über die Oberfläche des Bauteils reibt und somit einen mechanischen Materialabtrag bewirkt. Beim Beschichten kann die Vibration am Anfang eines Beschichtungsvorrangs auch dazu verwendet werden, dass mittels der Partikel Verunreinigungen oder eine Passivierungsschicht von dem zu beschichtenden Bauteil entfernt wird. Auch hier ist eine Spülflüssigkeit von Vorteil, mit der eine anschließende Reinigung der zu bearbeitenden Oberfläche erfolgen kann.

Der Bearbeitungskopf kann vorteilhaft mit einer Führungsvorrichtung mechanisch verbunden sein. Diese Führungsvorrichtung kann beispielsweise ein Roboterarm sein. Eine andere Möglichkeit ist eine X-Y-Führung mittels Führungsschienen und einem geeigneten Antrieb, wobei der Bearbeitungskopf dann in einer X-Y-Ebene bewegt werden kann. Insbesondere beim additiven Herstellen von Bauteilen kann dies von Vorteil sein, da die hergestellten Lagen des Bauteils ebenfalls waagerecht ausgerichtet sind. Hierdurch ist es auch möglich, beispielsweise in einem Schritt zwischen der Herstellung zweier Lagen des Bauteils zu einer elektrochemischen Bearbeitung der gerade hergestellten Lage zu kommen.

Weiterhin wird die oben genannte Aufgabe durch die Anlage zum additiven Herstellen eines Werkstücks gelöst, wobei in dieser Anlage eine Aufnahme für das Werkstück vorgesehen ist. Das Werkstück ist hierbei das zu bearbeitende Bauteil. In der Anlage ist erfindungsgemäß eine Vorrichtung in der oben beschriebenen Weise angeordnet und kann so, wie bereits vorstehend beschrieben, in das Verfahren zum Herstellen des Werkstücks integriert werden. Hierdurch lässt sich die Qualität der hergestellten Bauteile bereits während der Herstellung in der additiven Fertigungsanlage verbessern.

Vorteilhaft ist die Anlage zur Durchführung eines pulverbettbasierten additiven Herstellungsverfahrens ausgelegt. Hierbei kann es sich um Elektronenstrahlschmelzen, Laserschmelzen oder Lasersintern handeln. Die Bauteile, die hier in einem Pulverbett hergestellt werden, können dann nachbearbeitet werden. Eine sofortige Absaugung des Elektrolyten bewirkt außerdem vorteilhaft, dass der Elektrolyt nicht in das Pulverbett abfließt.

Weitere Einzelheiten der Erfindung werden nachfolgend anhand der Zeichnung beschrieben. Gleiche oder sich entsprechende Zeichnungselemente sind jeweils mit den gleichen Bezugszeichen versehen und werden nur insoweit mehrfach erläutert, wie sich Unterschiede zwischen den einzelnen Figuren ergeben.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsformen auch durch weitere der bereits beschriebenen Merkmale der Erfindung ergänzbar.

Es zeigen:
- Figur 1: ein Ausführungsbeispiel der erfindungsgemäßen Vorrichtung im Schnitt,
- Figur 2: ein Vlies, mit dem für ein Ausführungsbeispiel der erfindungsgemäßen Vorrichtung ein Elektrolytüberträger herstellbar ist, und
- Figur 3: ein Ausführungsbeispiel der erfindungsgemäßen Anlage als Ausschnitt einer Prozesskammer zum additiven Herstellen eines Bauteils.

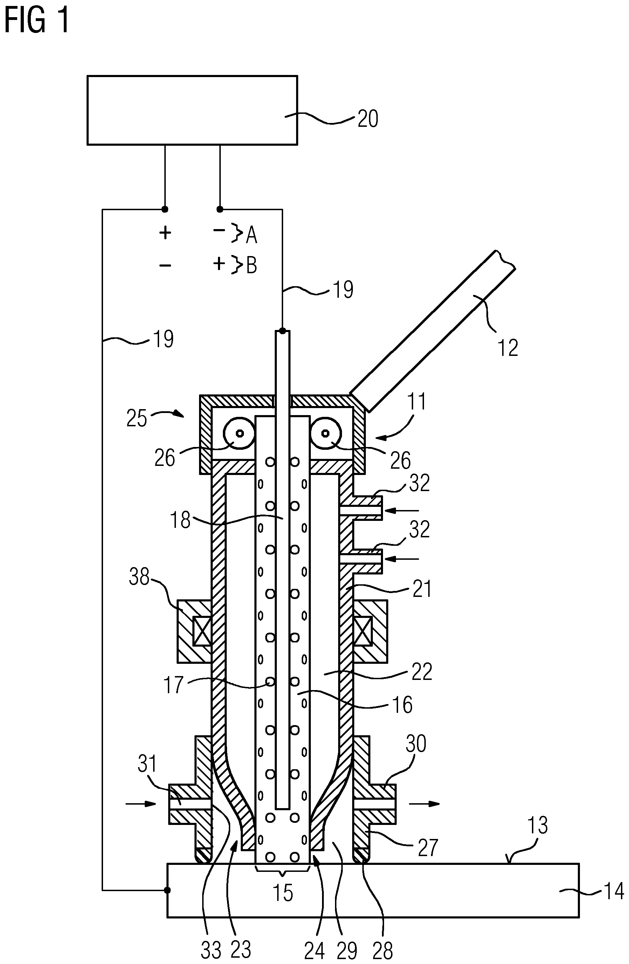

Eine Vorrichtung zum selektiven elektrochemischen Bearbeiten gemäß Figur 1 weist einen Bearbeitungskopf 11 auf, der an einer Führungsvorrichtung 12 befestigt ist. Diese kann Teil eines Roboterarms sein, wobei dieser Roboterarm durch eine nicht dargestellte Steuerung programmierbar ist. Mit der Führungsvorrichtung 12 kann der Bearbeitungskopf 11 auf die Oberfläche 13 eines Werkstücks 14 abgesenkt werden, wobei die Bearbeitung der Oberfläche 13 durch eine Bearbeitungsfläche 15 eines Elektrolytüberträgers 16 erfolgt.

Der Elektrolytüberträger 16 ist Teil des Bearbeitungskopfes 11. Der Elektrolytüberträger 16 ist zylindrisch aufgebaut. In Figur 1 ist eine kreiszylindrische Form des Elektrolytüberträgers dargestellt, es ist jedoch auch jede andere zylindrisehe Form denkbar. Hierbei ist das Wort "zylindrisch" im weitesten Sinne seiner Bedeutung zu verstehen. Dies bedeutet, dass auch andere, beispielsweise Prismen, unter diese Begrifflichkeit fallen.

Der Elektrolytüberträger gemäß Figur 1 ist aus einem Material mit Poren 17 gebildet, welche ein offenes Porensystem und damit ein kapillares Kanalsystem zur Leitung des Elektrolyten bilden. Das offenporige Material kann beispielsweise ein Schwamm sein. Im Inneren des Schwamms ist eine stabförmige erste Elektrode 18 ausgebildet. Die zweite Elektrode wird durch das Werkstück 14 selbst gebildet. Eine Kontaktierung der beiden Elektroden kann durch schematisch angedeutete elektrische Leitungen 19 erfolgen, wobei diese an eine steuerbare Spannungsquelle 20 angeschlossen sind.

Die Spannungsquelle 20 steuert die elektrochemischen Vorgänge des Bearbeitens durch Einstellung der elektrochemischen Bearbeitungsparameter, die zum Beschichten und Entschichten der Oberfläche 13 vorgegeben werden können. Daher sind in Figur 1 die beiden Fälle A und B eingezeichnet. Der Fall A dient zum Abtragen von Material von dem Werkstück 14, wobei dieses als Anode positiv geladen ist und die Elektrode 18 im Elektrolytüberträger 16 negativ geladen ist und als Kathode fungiert. Der Fall B dient zum Beschichten eines Materials, welches im Elektrolyt ionisiert vorliegt, wobei die Elektrode 18 positiv geladen ist und das Werkstück 14 negativ geladen ist.

Der Bearbeitungskopf ist folgendermaßen aufgebaut. Dieser weist ein Rohr 21 auf, welches zylindrisch ausgebildet ist und im Inneren einen Zuführkanal 22 bildet. Dieser Zuführkanal ist zylindrisch, wobei der Elektrolytüberträger 16 koaxial mit dem Zuführkanal 22 angeordnet ist. Das Rohr 21 weist auf der Seite des Werkstücks 14 ein konzentrisch sich verjüngendes Rohrende 23 auf, welches eine Austrittsöffnung 24 für den Elektrolytüberträger 16 ausbildet. Durch diese Austrittsöffnung 24 kann der Elektrolytüberträger 16 axial herausgeschoben werden, wenn dieser mechanisch verschlissen ist. Hierfür ist eine Nachführvorrichtung 25 mit Transporträdern 26 ausgebildet (ein Antrieb ist nicht dargestellt).

Am Rohrende 23 ist außerdem eine Manschette 27 ausgebildet, die mit einer Dichtlippe 28 auf die Oberfläche 13 des Werkstücks 14 aufsetzt. Hierdurch wird eine ringförmige Absaugöffnung 29 ausgebildet, die das Rohrende 23 ringförmig umgibt. Elektrolyt, welches sich auf der Oberfläche 13 befindet, kann auf diese Weise abgesaugt werden, wobei dies über einen Absaugkanal 30 erfolgt. Zusätzlich kann ein Spülmittel über einen Spülkanal 31 mit einer Spülöffnung 33 in den Ringraum der Manschette eingefüllt und über den Absaugkanal 30 wieder abgesaugt werden. Hierdurch gelingt bei Bedarf auch eine Reinigung der Oberfläche 13. Für den Elektrolyten sind überdies am Rohr 21 zwei Einspeisungsstellen 32 vorgesehen, über die der Elektrolyt sowie beispielsweise in einer Flüssigkeit, insbesondere dem Elektrolyten selbst, dispergierte Partikel in den Zuführkanal 22 eingespeist werden können. Die Partikel lassen sich dann im Falle des Beschichtens durch die Bearbeitungsvorrichtung in der Schicht abscheiden.

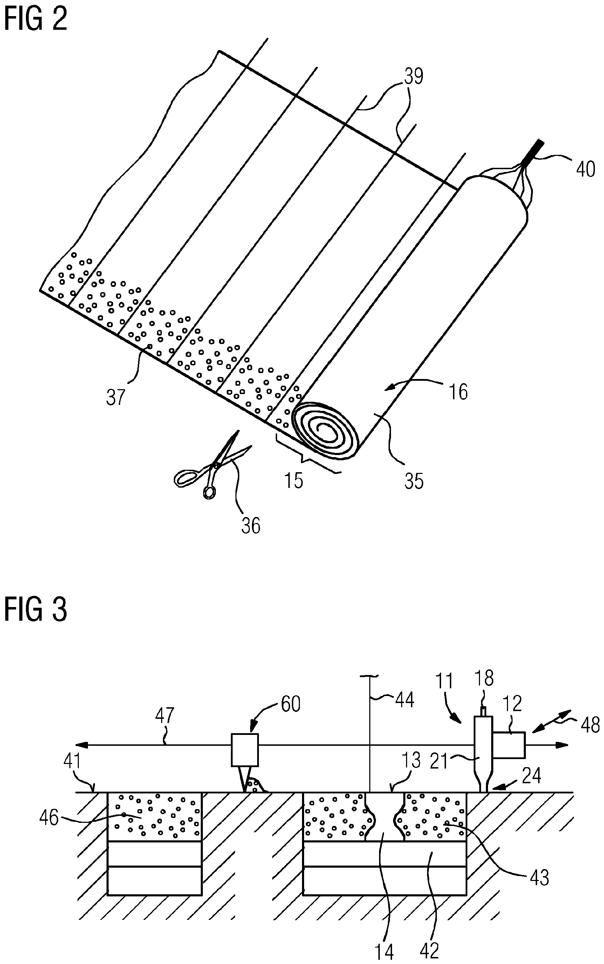

In Figur 2 ist dargestellt, dass der Elektrolytüberträger 16 auch aus einem Vlies 34 hergestellt werden kann. Dieses wird zu einer Rolle 35 aufgerollt, und, wenn diese Rolle 35 den erforderlichen Durchmesser erreich hat, durch eine Trennvorrichtung 36 abgelängtt. Das Vlies kann beispielsweise aus einer Glasfasermatte bestehen.

Um den Verschleiß der Bearbeitungsfläche 15 zu verringern, können in das Vlies Hartstoffpartikel 37 eingebracht werden. Diese unterstützen insbesondere bei einem abtragend bearbeitenden Werkstück auch den Materialabtrag durch eine schleifende Beanspruchung. Zu diesem Zweck kann der Bearbeitungskopf 11 auch in Vibration versetzt werden, was beispielsweise durch einen in Figur 1 dargestellten Piezoaktor 38 erfolgen kann. Außerdem kann statt einer zentralen Elektrode, wie in Figur 1 dargestellt, auch eine Vielzahl von Drähten 39 in das Fließ mit eingewickelt werden. Diese können, wie in Figur 2 dargestellt ist, nach dem Ablängen der Rolle zu einem Leiter 40 zusammengeführt werden (z. B. durch Verdrillen).

In Figur 3 ist der Boden 41 einer Prozesskammer einer additiven Fertigungsanlage beispielsweise für das selektive Laserschmelzen dargestellt. Eine Aufnahme 42 besteht aus einer Bauplattform für das Bauteil 14, was in einem Pulverbett 43 durch Verfestigen des Pulvers mit einem Laserstrahl 44 hergestellt wird. Die Aufnahme 42 wird dabei lagenweise abgesenkt, wobei eine Dosiervorrichtung 45 (Rakel) Material aus einem Pulvervorrat 46 auf dem Pulverbett 43 verteilt.

Die Dosiervorrichtung 45 und der Bearbeitungskopf 11 können in den Richtungen der angedeuteten Pfeile (X-Richtung 47, Y-Richtung 48, letztere perspektivisch dargestellt) verschoben werden. Dadurch kann zum einen das Pulverbett mit neuem Pulver versorgt werden, zum anderen lässt sich jederzeit eine Bearbeitung mit dem Bearbeitungskopf an jeder beliebigen Stelle des Pulverbetts durchführen, also auch auf der aktuell dargestellten Lage des Bauteils 14. Hierdurch können z. B. Qualitätsprobleme in der Oberflächenbeschaffenheit durch einen Abtrag von überschüssigem Material korrigiert werden. Dies kann beispielsweise helfen, den Fertigungseffekt einer sogenannten Materialüberhöhung zu eliminieren, der auftritt, wenn aufgrund einer verringerten Wärmeabfuhr in das bereits hergestellte Bauteil das Schmelzbad beim Laserschmelzen oder Elektronenstrahlschmelzen zu groß wird.

### Bezugszeichenliste

- 11: Bearbeitungskopf
- 12: Führungsvorrichtung
- 13: Oberflächen
- 14: Werkstück
- 15: Bearbeitungsfläche
- 16: Elektrolytüberträger
- 17: Poren
- 18: Elektrode
- 19: Leitung
- 20: Spannungsquelle
- 21: Rohr
- 22: Zuführkanal
- 23: Radende
- 24: Austrittsöffnung
- 25: Nachführvorrichtung
- 26: Transporträder
- 27: Manschette
- 28: Dichtlippe
- 29: Absaugöffnung
- 30: Absaugkanal
- 31: Spülkanal
- 32: Einspeisungsquelle
- 33: Spülöffnung
- 34: Vlies
- 35: Rolle
- 36: Trennvorrichtung
- 37: Hartstoffpartikel
- 38: Piezoaktor
- 39: Draht
- 40: Leiter
- 41: Boden
- 42: Aufnahme
- 43: Pulverbett
- 33: Laserstrahl
- 45: Dosiervorrichtung
- 46: Pulvervorrat
- 47: x-Richtung
- 48: y-Richtung

## Patentansprüche

1. Vorrichtung zum selektiven elektrochemischen Bearbeiten von Werkstücken, aufweisend einen Bearbeitungskopf (11), der mit einem Elektrolytüberträger (16) und einem Zuführkanal (22) für einen Elektrolyten ausgestattet ist,
**dadurch gekennzeichnet,**
**dass** der Elektrolytüberträger (16) im Inneren des Zuführkanals (22) angeordnet ist und durch eine Austrittsöffnung (24) des Zuführkanals unter Ausbildung einer Bearbeitungsfläche (15) für das Werkstück nach außen geführt ist.

2. Vorrichtung nach Anspruch 1,
**dadurch gekennzeichnet,**
**dass** der Elektrolytüberträger (16) zylindrisch ist und derart beweglich in dem Zuführkanal (22) angeordnet ist, dass dieser in der Austrittsöffnung (24) axial verschoben werden kann.

3. Vorrichtung nach Anspruch 2,
**dadurch gekennzeichnet,**
**dass** der Elektrolytüberträger (16) ein gerolltes Vlies (34), insbesondere ein gerolltes faserverstärktes Vlies, umfasst.

4. Vorrichtung nach einem der Ansprüche 2 oder 3,
**dadurch gekennzeichnet,**
**dass** Zuführkanal (22) zylindrisch ausgeführt ist und der Elektrolytübertäger (16) koaxial im Zuführkanal verläuft.

5. Vorrichtung nach einem der voranstehenden Ansprüche,
**dadurch gekennzeichnet,**
**dass** in dem Elektrolytüberträger (16) Partikel (37) aus einem im Vergleich zu dem Elektrolytüberträger (16) härteren Material vorgesehen sind.

6. Vorrichtung nach einem der voranstehenden Ansprüche,
**dadurch gekennzeichnet,**
**dass** der Bearbeitungskopf (11) ein Rohr +18 insbesondere aus Glas umfasst, in dem der Zuführkanal (22) verläuft.

7. Vorrichtung nach Anspruch 6,
**dadurch gekennzeichnet,**
**dass** die Austrittsöffnung (24) durch ein sich verjüngendes Rohrende (23) des Rohres +18 ausgebildet ist.

8. Vorrichtung nach einem der voranstehenden Ansprüche,
**dadurch gekennzeichnet,**
**dass** der Zuführkanal mindestens zwei Einspeisungsstellen (32) für unterschiedliche Beschichtungsmaterialen, von denen eines insbesondere Partikel umfassen kann, aufweist.

9. Vorrichtung nach einem der voranstehenden Ansprüche,
**dadurch gekennzeichnet,**
**dass** an der Austrittsöffnung (24) eine Absaugöffnung (29) eines Absaugkanals (30) angeordnet ist.

10. Vorrichtung nach Anspruch 9,
**dadurch gekennzeichnet,**
**dass** die Absaugöffnung (29) sich ringförmig um die Austrittsöffnung erstreckt.

11. Vorrichtung nach einem der voranstehenden Ansprüche,
**dadurch gekennzeichnet,**
**dass** an der Austrittsöffnung (24) eine Spülöffnung (33) eines Spülkanals (31) angeordnet ist.

12. Vorrichtung nach einem der voranstehenden Ansprüche,
**dadurch gekennzeichnet,**
**dass** der Bearbeitungskopf (11) mit einem Vibrationsaktuator, insbesondere einem Piezoaktor (38), ausgestattet ist.

13. Vorrichtung nach einem der voranstehenden Ansprüche,
**dadurch gekennzeichnet,**
**dass** der Bearbeitungskopf (11) mit einer Führungsvorrichtung (12) mechanisch verbunden ist.

14. Anlage zum additiven Herstellen eines Werkstücks (14) mit einer Aufnahme (42) für das Werkstück (14),
**dadurch gekennzeichnet,**
**dass** in der Anlage eine Vorrichtung nach einem der voranstehenden Ansprüche angeordnet ist.

15. Anlage nach Anspruch 14,
**dadurch gekennzeichnet,**
**dass** diese zur Durchführung eines pulverbettbasierten additiven Herstellungsverfahrens ausgelegt ist.
